(19) Europäisches Patentamt
European Patent Office
Office européen des brevets

(11) Veröffentlichungsnummer: **0 001 096**
**B1**

(12) **EUROPÄISCHE PATENTSCHRIFT**

(45) Veröffentlichungstag der Patentschrift: **14.04.82**

(51) Int. Cl.³: **C 08 L 69/00**

(21) Anmeldenummer: **78100798.4**

(22) Anmeldetag: **31.08.78**

(54) **Polycarbonatgemische mit verbesserter Flammwidrigkeit.**

(30) Priorität: **06.09.77 US 830518**
**29.03.78 US 891252**

(43) Veröffentlichungstag der Anmeldung:
**21.03.79 Patentblatt 79/6**

(45) Bekanntmachung des Hinweises auf die Patenterteilung:
**14.04.82 Patentblatt 82/15**

(84) Benannte Vertragsstaaten:
**DE FR GB**

(56) Entgegenhaltungen:
**DE-A-2 631 756**
**FR-1 386 646**
**US-A-3 250 744**
**US-A-3 398 212**
**US-A-3 775 367**
**US-A-4 043 980**

(73) Patentinhaber: **Mobay Chemical Corporation, Penn Lincoln Parkway West, Pittsburgh, Pennsylvania 15205 (US)**

(72) Erfinder: **Sivaramakrishnan, Parameswar, 159 Fairview Drive, New Martinsville W. Virginia, USA 26155 (US)**
Erfinder: **Baron, Arthur L., 211 East Thistle Court, New Martinsville W. Virginia, USA 26155 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

**EP 0 001 096 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Polycarbonatgemische mit verbesserter Flammwidrigkeit

Gegenstand der vorliegenden Erfindung sind halogenhaltige Gemische von aromatischen Copolycarbonaten, die dadurch gekennzeichnet sind, dass sie

a) ein Copolycarbonat aus

A) einem Diphenol der Formel

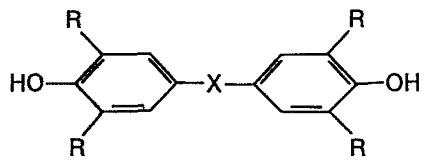

worin die Reste R gleich oder verschieden sind und für H oder $C_1$–$C_4$-Alkyl stehen und worin X für eine Bindung, $C_1$–$C_8$-Alkylen, $C_2$–$C_8$-Alkyliden, $C_5$–$C_{15}$-Cycloalkylen, $C_5$–$C_{15}$-Cycloalkyliden, $-SO_2-$, $-SO-$, $-CO-$ oder

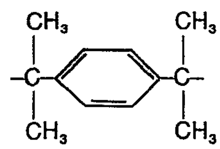

steht;

B) 2 bis 50 Mol-%, bezogen auf die Gesamtmole der Diphenole, eines aromatischen Thiodiphenols der Formel

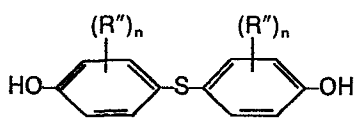

worin die Reste R″, die gleich oder verschieden sein können, für H oder $C_1$–$C_4$-Alkyl stehen und n für 0, 1 oder 2 steht,

in Form des Reaktionsproduktes von A), B) und

C) einer Verbindung aus der aus Carbonylbromid, Phosgen, Bischlorameisensäureestern von (A) oder (B) und Diarylcarbonaten bestehenden Gruppe,

b) in inniger Mischung mit einer monomeren halogenhaltigen Verbindung mit 2 bis 10 Halogenatomen, wobei die halogenhaltigen Gemische von aromatischen Copolycarbonaten etwa 1 bis 5 Gew.-% Halogen enthalten, und

c) etwa 0,01 bis 3 Gew.-%, vorzugsweise 0,05 bis 1 Gew.-%, eines Sulfonsäure- oder Carbonsäuresalzes, bezogen auf das Gewicht des aromatischen Copolycarbonatgemisches, enthalten.

Die deutsche Offenlegungsschrift 2 721 595 beschreibt Copolycarbonate aus u.a. Bisphenol A und Thiodipenolen. Diese Produkte haben gegenüber Bisphenol-A Polycarbonaten verbesserte kritische Dicke, aber noch kein optimales Brandverhalten.

Die französische Patentschrift 1 386 646 lehrt, einem aromatischen Polycarbonat ein bromiertes Polycarbonat zuzusetzen, um dessen Brandverhalten zu verbessern.

Die US-Patentschrift 3 775 367 beschreibt den Zusatz von fluorierten Alkalisulfonaten zu thermoplastischen Polycarbonaten.

Aus der Offenlegungsschrift 2 631 756 ist bekannt, als flammhemmenden Zusatzstoff für Polycarbonate Alkali- oder Erdalkalimetallsalze eines anorganischen Sulfits, Thiosulfats, Dithionits, Pyrosulfits oder Mischungen derselben in Kombination mit einer halogenierten, organischen Verbindung zu benutzen.

Gemäss allen diesen Lehren erreicht man entweder ausreichende Flammfestigkeit bei unzureichender kritischer Dicke und teilweise verschlechterten mechanischen Eigenschaften, oder man erhält keine ausreichende Flammfestigkeit, wenn die mechanischen Eigenschaften gut sind.

Die erfindungsgemässe Kombination von Thiodiphenol als einkondensierter Bestandteil des Polycarbonats, monomerer Halogenverbindung in relativ kleinen Mengen und bestimmten Sulfonsäure- oder Carbonsäuresalzen vermeiden diese Nachteile. Es werden Produkte erhalten, die sowohl gut mechanische Eigenschaften, hinreichende kritische Dicke als auch sehr gute Flammwidrigkeit besitzen.

Die Copolycarbonate gemäss der Erfindung können nach üblichen Verfahren der Herstellung von Polycarbonatharzen hergestellt werden und können Gewichtsmittel-Molekulargewichte von etwa 10 000 bis 200 000, vorzugsweise von etwa 20 000 bis 80 000, und insbesondere eine Schmelzflussrate von etwa 1 bis 24 g/10 Min. bei 300°C gemäss ASTM D-1238 haben, wobei eine Schmelzflussrate von etwa 2 bis 6 g/10 Minuten besonders bevorzugt wird.

Beliebige geeignete Verfahren, Reaktionsteilnehmer, Katalysatoren, Lösungsmittel, Reaktionsbedingungen u.dgl., die üblicherweise bei der Synthese von Polycarbonatharzen zur Anwendung kommen und beispielsweise in den DE-C 962 274 und 1 046 311 und in den US-A 2 964 794, 2 970 131, 2 991 273, 2 999 835, 2 999 846, 3 028 365, 3 153 008, 3 187 065, 3 215 668 und 3 248 414 beschrieben werden, können auch für die Herstellung der Copolycarbonate gemäss der Erfindung zur Anwendung kommen. Bevorzugt wird das Verfahren der Grenzflächen-Polykondensation.

Beim Grenzflächen-Polykondensationsverfahren werden durch Umsetzung der aromatischen Dihydroxyverbindungen mit einem Alkalihydroxyd oder Erdalkalioxyd oder -hydroxyd vorab Salze der Hydroxyverbindungen hergestellt. Das Salzgemisch ist in einer wässrigen Lösung oder Suspension vorhanden und wird mit Phosgen, Carbonylbromid oder Bischlorameisensäureestern der aromatischen Dihydroxyverbindungen umgesetzt. Dem Reaktionsgemisch wird ein organisches Lösungsmittel zugesetzt, das das Polymer, aber nicht die aromatische Dihydroxysalze

löst. Beispielsweise werden chlorierte und nicht chlorierte aliphatische Kohlenwasserstoffe oder chlorierte oder nicht chlorierte aromatische Kohlenwasserstoffe als organisches Lösungsmittel verwendet, das das Kondensationsprodukt löst. Beispiele geeigneter Lösungsmittel sind Cyclohexan, Methylcyclohexan, Benzol, Toluol, Xylol, Methylenchlorid, Chloroform, Tetrachlorkohlenstoff und Chlorbenzol.

Zur Begrenzung des Molekulargewichts können monofunktionelle Reaktionsteilnehmer wie Monophenole, z.B. die Propyl-, Isopropyl- und Butylphenole, insbesondere p-t-Butylphenol und Phenol selbst, verwendet werden. Zur Beschleunigung der Reaktion können Katalysatoren, z.B. tertiäre Amine, quaternäre Ammonium-, Phosphonium- oder Arsoniumsalze verwendet werden. Die Reaktionstemperaturen sollten im Bericht von etwa –20 bis +150°C, vorzugsweise im Bereich von 0 bis etwa 100°C liegen.

Beim Polykondensationsverfahren in homogener Phase werden die gelösten Reaktionskomponenten in einem inerten Lösungsmittel in Gegenwart einer äquivalenten Menge einer tertiären Aminbase, die für die Absorption der erzeugten HCl erforderlich ist, z.B. N,N-Dimethylanilin, N,N-Dimethylcyclohexylamin oder vorzugsweise Pyridin, polykondensiert. Bei einem weiteren Verfahren kann ein Diarylcarbonat mit den aromatischen Dihydroxyverbindungen unter Bildung des Polycarbonats umgesetzt werden.

Natürlich können bei den vorstehend beschriebenen Verfahren in chemisch geeigneter Weise sowohl die aromatischen Dihydroxyverbindungen als auch die Monohydroxyverbindungen in Form von Alkalisalzen und/oder Bishalogenameisensäureestern und die dann noch erforderliche Menge des Phosgens oder Carbonylbromids kombiniert werden, um hochmolekulare Produkte zu bilden. Auch andere Syntheseverfahren, wie sie in der US-A 3 912 688 beschrieben werden, können zur Herstellung der Polycarbonate gemäss der Erfindung angewandt werden.

Geeignete aromatische Diphenole sind solche der Formel

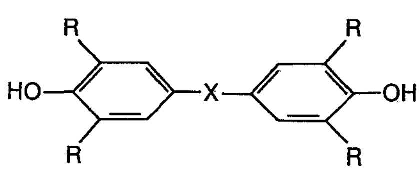

worin die Reste R gleich oder verschieden sind und für H oder $C_1$–$C_4$-Alkyl stehen und worin X für eine Bindung, $C_1$–$C_8$-Alkylen, $C_2$–$C_8$-Alkyliden, $C_5$–$C_{15}$-Cycloalkylen, $C_5$–$C_{15}$-Cycloalkyliden, $-SO_2-$, $-SO-$, $-CO-$ oder

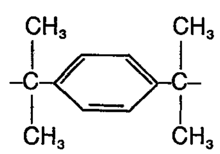

steht.

Als Beispiele dieser Diphenole seien genannt:
4,4'-Dihydroxydiphenyl,
2,2-Bis-(4-hydroxyphenyl)-propan (Bisphenol A),
2,4-Bis-(4-Hydroxyphenyl)-2-methylbutan,
1,1-Bis-(4-hydroxyphenyl)-cyclohexan,
α,α-Bis-(4-hydroxyphenyl)-p-diisopropyl-benzol,
2,2-Bis-(3-methyl-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methyl-butan,
1,1-Bis-(3,5-dimethyl-4-hydroxyphenyl)-cyclohexan und
α,α-Bis-(3,5-dimethyl-4-hydroxyphenyl)-p-diisopropylbenzol.

Als Beispiele besonders bevorzugter aromatischer Diphenole sind
2,2-Bis-(4-hydroxyphenyl)-propan,
2,2-Bis-(3,5-dimethyl-4-hydroxyphenyl)-propan und
1,1-Bis-(4-hydroxyphenyl)-cyclohexan
zu nennen.

Am meisten bevorzugt als aromatisches Diphenol wird 2,2-Bis-(4-hydroxyphenyl)-propan (Bisphenol A).

Die für die Zwecke der Erfindung geeigneten aromatischen Thiodiphenole haben die Strukturformel

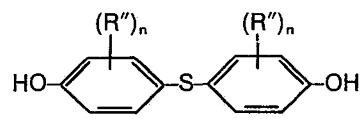

in der die Reste R'', die gleich oder verschieden sein können, für H oder $C_1$–$C_4$-Alkyl, vorzugsweise für H stehen und n für 0, 1 oder 2 steht.

Bevorzugt als aromatisches Thiodiphenol wird 4,4'-Thiodiphenol.

Die erfindungsgemässen Copolycarbonate aus aromatischem Diphenol und aromatischem Thiodiphenol enthalten vorzugsweise etwa 2 bis 50 Mol-%, insbesondere etwa 5 bis 40 Mol-% des aromatischen Thiodiphenols, bezogen auf die Gesamtmole der Diphenole. Geeignete Copolycarbonate von aromatischem Diphenol und aromatischem Thiodiphenol werden in der US-A 3 250 774 beschrieben.

Die aromatischen Copolycarbonate können durch Einarbeitung geringer, vorzugsweise zwischen etwa 0,05 und 2,0 Mol-% (bezogen auf die verwendeten Diphenole) liegender Mengen von trifunktionellen oder mehr als trifunktionellen Verbindungen, insbesondere Verbindungen mit drei oder mehr phenolischen Hydroxylgruppen, verzweigt sein.

Polycarbonate dieser Art werden beispielsweise in den DE-A 1 570 533, 1 595 762, 2 116 974, und 2 113 347, in der GB-A 1 079 821 und in der US-PS 3 544 514 beschrieben.

Als Beispiele von Verbindungen mit drei oder mehr als drei phenolischen Hydroxylgruppen, die verwendet werden können, seien genannt:
Phloroglucin,
4,6-Dimethyl-2,4,6-tri-(4-hydroxy-phenyl)-heptan,

2,4,6-Trimethyl-2,4,6-tri-(4-hydroxyphenyl)-heptan,
1,4,5-Tri-(4-hydroxy-phenyl)-benzol,
1,1,1-Tri-(4-hydroxyphenyl)-äthan,
Tri-(4-hydroxyphenyl)-phenylmethan,
2,2-Bis- (4,4-bis-(4-hydroxyphenyl-cyclo-hexyl)-propan,
2,4-Bis-(4-hydroxyphenyl-isopropyl)-phenol,
2,6-Bis-(2-hydroxy-5′-methyl-benzyl)-methyl-phenol,
2-(4-Hydroxyphenyl)-2-(2,4-dihydroxyphenyl)-propan,
Hexa-(4-(4-hydroxyphenylisopropyl)-phenyl)-ortho-terephthalsäureester,
Tetra-(4-hydroxyphenyl)-methan,
Tetra-(4-(4- hydroxyphenylisopropyl)-phenoxy)-methan und
1,4-Bis-(4′, 4″-dihydroxytriphenyl)-methyl)-benzol.

Einige weitere trifunktionelle Verbindungen sind 2,4-Dihydroxybenzoesäure,
Trimesinsäure,
Cyanursäurechlorid und
3,3-Bis-(4-hydroxyphenyl)-2-oxo-2,3-dihydro-indol.

Die aromatischen Copolycarbonate gemäss der Erfindung werden mit einer wirksamen Menge einer halogenhaltigen Verbindung, vorzugsweise einer brom- oder chlorhaltigen Verbindung, innig gemischt, wobei ein aromatisches Copolycarbonatgemisch, das verbesserte kritische Dicke, verbesserte Flammwidrigkeit und Feuerwiderstandsfähigkeit sowie gute Transparenz selbst bei einer Dicke von 1,6 mm aufweist, erhalten wird. Der Halogengehalt des aromatischen Polycarbonatgemisches beträgt 1 bis 5 Gew.-%, bezogen auf das Gewicht des aromatischen Copolycarbonatgemisches.

Gemäss der Erfindung können beliebige monomere halogenhaltige Verbindungen, die das Copolycarbonat nicht nachteilig beeinflussen und 2 bis 10 Halogenatome enthalten, für die Zwecke der Erfindung verwendet werden.

Beispiele einiger geeigneter monomerer halogenhaltiger Verbindungen sind Tetrabrombuten, Tetrabromäthan, Tribrompropan, Octachlorpropan, Hexachloräthan, Tribrombutan, 1,2,3,-4,5,6,-Hexachlorcyclohexan u.dgl., geeignete halogenierte aromatische Kohlenwasserstoffe, z.B. Dichlorbiphenyl (o), (m), (p), Bromjodbenzol (o), (m), (p),
4,4′-Dibrombiphenyläther,
Decabromdi-phenyläther,
4,4′-Dichlorbenzophenon,
3,3′-Dichlorbiphenyl,
4,4′-Dichlorbiphenyl,
1,3-Dichlornaphthalin,
1,4-Dichlornaphthalin,
1,5-Dichlor-naphthalin,
1,7-Dichlornaphthalin,
2,6- Dichlornaphthalin,
o-, m- und p-Dijodbenzol,
1,2,4-Tribrombenzol,
1,3,5-Tribrombenzol,
1,2,3,5-Tetrabrombenzol, Pentabrombenzol, Pentachlorbenzol, Chloracenaphthen, 2,7-Dibromfluoren, Tetrabromphthalsäureanhydrid, Pentachloräthylbenzol, Hexabrombenzol u.dgl. Entsprechende Chlor-, Fluor-, Brom- und Jodisomere, vorzugsweise Chlor- und Bromisomere dieser Verbindungen, können ebenfalls für die Zwecke der Erfindung verwendet werden.

Als halogenierte organische Ester eignen sich beispielsweise Chloressigsäureester, Fluoressigsäureester, Bromessigsäureester, Halogenphthalsäureester, z.B.Dimethyltetrabromphthalat, Diäthyltetrabromphthalat, Di-n-propyl-tetrachlorphthalat und Di-n-octyl- dichlorphthalat und Gemische dieser Verbindungen.

Ferner können Gemische beliebiger der vorstehend genannten halogenierten Materialien verwendet werden.

Gemäss der Erfindung enthält das aromatische Copolycarbonatgemisch ausserdem Mengen eines Sulfonsäure- oder Carbonsäuresalzes von 0,01 bis 3 Gew.-%, insbesondere 0,05 bis 1 Gew.-%, bezogen auf das Gewicht des aromatischen Copolycarbonatgemisches. Besonders bevorzugt wird ein perfluoriertes Sulfonsäure- oder Carbonsäuresalz.

Geeignete Sulfonsäuresalze, die verwendet werden können, werden in der US-A 3 775 367 beschrieben. Hierzu gehören Perfluoralkanalkalisulfonate und Perfluoralkanammoniumsulfonate, vorzugsweise solche, die etwa 4 bis 8 C-Atome im Alkylrest enthalten. Beispiele geeigneter Salze dieser Art sind Natrium- und Kaliumperfluorbutansulfonat, Natrium- und Kaliumperfluormethylbutansulfonat, Natrium- und Kaliumperfluoroctansulfonat, Natrium- und Kaliumperfluormethansulfonat, Natrium- und Kaliumperfluoräthansulfonat, Natrium- und Kaliumperfluorpropansulfonat, Natrium- und Kaliumperfluorhexansulfonat, Natrium- und Kaliumperfluorheptansulfonat, Tetraäthylammoniumperfluorbutansulfonat, Tetraäthylammoniumperfluormethylbutansulfonat und Gemische dieser Verbindungen. Die entsprechenden Salze von chlor-, brom- und jodhaltigen organischen Säuren können ebenfalls verwendet werden.

Beispiele geeigneter Carbonsäuresalze für die Zwecke der Erfindung sind die Alkalisalze, insbesondere die Natrium- und Kaliumsalze von aliphatischen, aromatischen oder aliphatisch-aromatischen einbasischen oder zweibasischen, gegebenenfalls halogenierten Carbonsäuren mit 1 bis 24 C-Atomen, z.B. die Salze von Ameisensäure, Essigsäure, Propionsäure, Buttersäure, Isobuttersäure, Valeriansäure, Capronsäure, Önanthsäure, Caprylsäure, Pelargonsäure, Caprinsäure, Laurinsäure, Stearinsäure, Behensäure, 5-Äthyl-dioxan-1,3-yl-5-carbonsäure, 3-(3,5-Di-t-butyl-4-hydroxyphenyl)-propionsäure, Ölsäure, Oxalsäure, Malonsäure, Bernsteinsäure, Glutarsäure, Adipinsäure, Pimelinsäure, Sebacinsäure, Benzoesäure und ihre p-alkylierten Derivate mit 1 bis 8 C-Atomen im Alkylrest, Salicylsäure, Terephthalsäure, Isophthalsäure, Phthalsäuremonobenzylester, Diglycolsäuremonodecylester, Adipinsäuremonobutylester und 3-Chlorbenzoesäure.

Diese Sulfonsäure- oder Carbonsäuresalze oder ihre Gemische können dem Polycarbonat während seiner Herstellung oder der Schmelze des fertigen Polycarbonats durch Homogenisierung unter Verwendung beispielsweise eines Extruders oder in beliebiger anderer geeigneter Weise, die gute Verteilung der Zusatzstoffe gemäss der Erfindung im Polycarbonatharz gewährleistet, zugesetzt werden. Einige dieser Verfahren werden beispielsweise in der US-A 3 509 091 beschrieben.

Die Copolycarbonate gemäss der Erfindung können ausserdem andere übliche Zusatzstoffe für Harze, z.B. Glasfasern, Pigmente, Farbstoffe, UV-Stabilisatoren, thermische Stabilisatoren, Entformungsmittel und Füllstoffe, enthalten. Beispiele solcher geeigneter Zusatzstoffe werden in der Veröffentlichung «Chemistry and Physics of Polycarbonates» von Hermann Schnell, Interscience Publishers, New York 1964, und in der Veröffentlichung «Polycarbonates» von W.F. Christopher und D.W. Fox, Reinhold Publishing Corp., New York 1962, genannt.

Alle Zusatzstoffe einschliesslich der Sulfonsäure- oder Carbonsäuresalze und halogenhaltigen Verbindungen können mit den Copolycarbonaten in bekannten Mischern, z.B. Knetern, Einschnecken-Extrudern, Doppelschneckenextrudern und Walzenmischern, gemischt werden.

Die Erfindung wird durch die folgenden Beispiele weiter erläutert.

Herstellung von Copolycarbonaten von aromatischen Diphenolen und aromatischen Thiodiphenolen

A. Ein Copolycarbonat eines aromatischen Diphenols und eines aromatischen Thiodiphenols wurde durch Umsetzung eines Gemisches der Dinatriumsalze von 2,2-Bis-(4-hydroxyphenyl)-propan (BPA) und 4,4'-Thiodiphenol (TDP) im Molverhältnis von 60:40 mit Phosgen durch die vorstehend beschriebene Synthese durch Grenzflächen-Polykondensation hergestellt. Das erhaltene Copolycarbonat hatte einen Schmelzindex von 7,4 g/10 Min. (ASTM D-1238).

B. Ein Copolycarbonat aus aromatischem Diphenol und aromatischem Thiodiphenol wurde auf die unter (A) beschriebene Weise hergestellt, wobei jedoch ein BPA/TDP-Gemisch im Molverhältnis von 70:30 verwendet wurde. Das erhaltene Copolycarbonat hatte einen Schmelzindex von 5,7 g/10 Min. (ASTM D-1238).

C. Ein Copolycarbonat aus aromatischem Diphenol und aromatischem Thiodiphenol wurde auf die unter (A) beschriebene Weise hergestellt, wobei jedoch ein Gemisch von BPA/TDP im Molverhältnis von 80:20 verwendet wurde. Das erhaltene Copolycarbonat hatte einen Schmelzindex von 2,5 g/10 Min. (ASTM D-1238)

D. Ein Copolycarbonat mit einem Schmelzindex von 7,2 g/10 Min. wurde durch Umsetzung eines Gemisches des Dinatriumsalzes von 2,2-Bis-(4-hydroxyphenyl)-propan (Bisphenol A) (BPA) und 4,4'-Thiodiphenol (TDP) mit Phosgen durch die vorstehend beschriebene Synthese durch Grenzflächen-Polykondensation hergestellt. 85 Mol-% Bisphenol A und 15 Mol-% 4,4'-Thiodiphenol, bezogen auf die Gesamtmole der Dihydroxyverbindungen, wurden verwendet.

Beispiel 1

Das gemäss Abschnitt (D) hergestellte BPA/TDP-Copolycarbonat (85/15) wurde mit 0,10 Gew.-% Kaliumper fluorbutansulfonat, bezogen auf das Gewicht des Copolycarbonatgemisches, innig gemischt und dann extrudiert, granuliert und zu Normprüfkörpern für die Bewertung der physikalischen Eigenschaften geformt. Die gemessenen Eigenschaften sind in Tabelle 1 genannt.

Beispiel 2

Das Copolycarbonat (D) wurde mit Decabromdiphenyläther in einer solchen Menge innig gemischt, dass das Copolycarbonatgemisch 5 Gew.-% Brom, bezogen auf das Gewicht des Copolycarbonatgemisches, enthielt. Die gemessenen Eigenschaften sind in Tabelle 1 genannt. Das geformte Copolycarbonatgemisch war bei einer Dicke von 1,6 mm in hohem Masse transparent.

Beispiel 3

Das Copolycarbonat (D) wurde mit 0,10 Gew.-% Kaliumperfluorbutansulfonat und einer solchen Menge Decabromdiphenyläther innig gemischt, dass das Copolycarbonatgemisch 5 Gew.-% Brom, bezogen auf das Gewicht des Copolycarbonatgemisches, enthielt. Die gemessenen Eigenschaften sind in Tabelle 1 genannt. Ausserdem erwies sich das geformte Copolycarbonatgemisch bei einer Dicke von 1,6 mm als in hohem Masse transparent.

Beispiel 4

Das Copolycarbonat (D) wurde nur mit Decabromdiphenyläther in einer solchen Menge innig gemischt, dass das Copolycarbonatgemisch 4 Gew.-% Brom, bezogen auf das Gewicht des Copolycarbonatgemisches, enthielt. Die gemessenen Eigenschaften sind in Tabelle 1 genannt.

Beispiel 5

Das Copolycarbonat (D) wurde mit 0,10 Gew.-% Kaliumperfluorbutansulfonat und einer solchen Menge Decabromdiphenyläther innig gemischt, dass das Copolycarbonatgemisch 4 Gew.-% Brom, bezogen auf das Gewicht des Copolycarbonatgemisches, enthielt. Die gemessenen Eigenschaften sind in Tabelle 1 genannt. Ausserdem war das geformte Copolycarbonatgemisch bei einer Dicke von 1,6 mm in hohem Masse transparent.

Beispiel 6

Das Copolycarbonat (D) wurde nur mit einer solchen Menge Decabromdiphenyläther innig gemischt, dass das Copolycarbonatgemisch 3 Gew.-% Brom, bezogen auf das Gewicht des Copolycarbonatgemisches, enthielt. Die gemessenen Eigenschaften sind in Tabelle 1 genannt.

Beispiel 7

Das Copolycarbonat (D) wurde mit 0,10 Gew.-% Kaliumperfluorbutansulfonat und einer solchen

Menge Decabromdiphenyläther innig gemischt, dass das Copolycarbonatgemisch 3 Gew.-% Brom, bezogen auf das Gewicht des Copolycarbonatgemisches, enthielt. Die gemessenen Eigenschaften sind in Tabelle 1 genannt. Ferner war das geformte Copolycarbonatgemisch bei einer Dicke von 1,6 mm in hohem Masse transparent.

Beispiel 8

Das Copolycarbonat (D) wurde mit 0,10 Gew.-% Kaliumperfluorbutansulfonat und einer solchen Menge Decabromdiphenyläther innig gemischt, dass das Copolycarbonatgemisch 2,5 Gew.-% Brom, bezogen auf das Gewicht des Copolycarbonatgemisches, enthielt. Die gemessenen Eigenschaften sind in Tabelle 1 genannt. Ferner war das geformte Copolycarbonatgemisch bei einer Dicke von 1,6 mm in hohem Masse transparent.

Beispiel 9

Das Copolycarbonat (D) wurde nur mit einer solchen Menge Decabromdiphenyläther innig gemischt, dass das Copolycarbonatgemisch 2 Gew.-% Brom, bezogen auf das Gewicht des Copolycarbonatgemisches, enthielt. Die gemessenen Eigenschaften sind in Tabelle 1 genannt.

Beispiel 10

Das Copolycarbonat (D) wurde mit 0,10 Gew.-% Kaliumperfluorbutansulfonat und einer solchen Menge Decabromdiphenyläther innig gemischt, dass das Copolycarbonatgemisch 2,0 Gew.-% Brom, bezogen auf das Gewicht des Copolycarbonatgemisches, enthielt. die gemessenen Eigenschaften sind in Tabelle 1 genannt. Ferner war das geformte Copolycarbonatgemisch bei einer Dicke von 1,6 mm in hohem Masse transparent.

Beispiel 11

Das Copolycarbonat (D) wurde nur mit einer solchen Menge Decabromdiphenyläther innig gemischt, dass das Copolycarbonatgemisch 1 Gew.-% Brom, bezogen auf das Copolycarbonatgemisch, enthielt. Die gemessenen Eigenschaften sind in Tabelle 1 genannt.

Beispiel 12

Das Copolycarbonat (D) wurde mit 0,10 Gew.-% Kaliumperfluorbutansulfonat und einer solchen Menge Decabromdiphenyläther innig gemischt, dass das Copolycarbonatgemisch 1 Gew.-% Brom, bezogen auf das Gewicht des Copolycarbonatgemisches, enthielt. Die gemessenen Eigenschaften sind in Tabelle 1 genannt. Ferner war das geformte Copolycarbonatgemisch bei einer Dicke von 1,6 mm in hohem Masse transparent.

Tabelle 1

Physikalische Eigenschaften von BPA/TDP-Copolycarbonaten (85/15), die einen Bromträger und/oder Kaliumperfluorbutansulfonat enthalten

| Beispiel Nr. | Zusatzstoffe, Gew.% Kaliumperfluorbutansulfonat | Von Decabromdiphenyläther stammendes Brom, % | Schmelzindex, g/10 Min. | UL-94 (1,6 mm) Gütewert | Mittl. Brenndauer, Sek. | $O_2$-Index, % | Izod-Kerbschlagzähigkeit 3,2 mm | 6,35 mm | Kritische Dicke, mm |
|---|---|---|---|---|---|---|---|---|---|
| 1 | 0,10 | – | 8,5 | V–2 | – | – | 7,5 | 4,07 | 6,2 |
| 2 | – | 5,0 | – | V–0 | 3,4 | 29,50 | 8,1 | 1,21 | 5,21 |
| 3 | 0,10 | 5,0 | 9,5 | V–0 | 2,1 | 38,1 | 8,45 | 1,14 | 4,45 |
| 4 | – | 4,0 | – | V–2 | – | 29,2 | 8,15 | 1,35 | 4,95 |
| 5 | 0,10 | 4,0 | 9,0 | V–0 | 2,6 | 37,0 | 7,99 | 1,24 | 4,45 |
| 6 | – | 3,0 | – | V–2 | – | 29,10 | 7,84 | 1,55 | 5,21 |
| 7 | 0,10 | 3,0 | 8,9 | V–0 | 3,0 | 37,0 | 7,84 | 1,32 | 4,95 |
| 8 | 0,10 | 2,5 | – | V–0 | 3,6 | – | – | – | – |
| 9 | – | 2,0 | – | V–2 | – | 28,93 | 7,94 | 1,82 | 5,72 |
| 10 | 0,10 | 2,0 | 8,7 | V–0 | 3,2 | 33,0 | 7,66 | 1,43 | 5,46 |
| 11 | – | 1,0 | – | V–2 | – | – | 7,66 | 2,95 | 5,97 |
| 12 | 0,10 | 1,0 | 8,5 | V–0* (80%) | 4,6 | 30,9 | 7,54 | 1,69 | 5,72 |

* Vier von fünf Prüfkörpern, die bei der genormten Testmethode verwendet wurden, zeigten einen Gütewert von V0–0 beim Test UL-94 (1,6 mm) zur Bewertung der Flammwidrigkeit.

Vergleichsversuche für Tabelle 1

Mischungen aus Bisphenol-A-Homopolycarbonat, Decabromdiphenyläther und 0,1 Gew.-% Kaliumperfluorbutansulfonat hatten folgende Werte:

Bromgehalt 2 Gew.-%, Schmelzindex (g/10 Min.) 8,02, kritische Dicke 4,4–4,7 mm, UL – 94 1,6 mm V – 2;

Bromgehalt 3 Gew.-%, Schmelzindex (g/10 Min.) 7,54, kritische Dicke 4,2–4,4, UL – 94, 1,6 mm V – 2.

**Patentansprüche**

1. Halogenhaltige Gemische von aromatischen Copolycarbonaten, dadurch gekennzeichnet, dass sie

a) ein Copolycarbonat aus

A) einem Diphenol der Formel

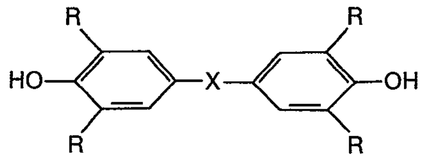

worin die Reste R gleich oder verschieden sind und für H oder $C_1$–$C_4$-Alkyl stehen und worin X für eine Bindung, $C_1$–$C_8$-Alkylen, $C_2$–$C_8$-Alkyliden, $C_5$–$C_{15}$-Cycloalkylen, $C_5$–$C_{15}$-Cycloalkyliden, $-SO_2-$, –SO–, –CO– oder

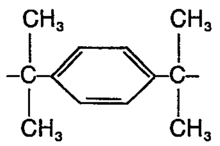

steht;

B) 2 bis 50 Mol-%, bezogen auf die Gesamtmole der Diphenole, eines aromatischen Thiodiphenols der Formel

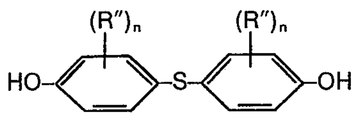

worin die Reste R″, die gleich oder verschieden sein können, für H oder $C_1$–$C_4$-Alkyl stehen und n für 0, 1 oder 2 steht,

in Form des Reaktionsproduktes von A), B) und

C) einer Verbindung aus der aus Carbonylbromid Phosgen, Bischlorameisensäureestern von (A) oder (B) und Diarylcarbonaten bestehenden Gruppe,

b) in inniger Mischung mit einer monomeren halogenhaltigen Verbindung mit 2 bis 10 Halogenatomen, wobei die halogenhaltigen Gemische von aromatischen Copolycarbonaten 1 bis 5 Gew.-% Halogen enthalten, und

c) 0,01 bis 3 Gew.-% eines Sulfonsäure- oder Carbonsäuresalzes, bezogen auf das Gewicht des aromatischen Copolycarbonatgemisches, enthalten.

2. Halogenhaltige aromatische Copolycarbonatgemische nach Anspruch 1, dadurch gekennzeichnet, dass 0,05 bis 1 Gew.-% eines Sulfonsäure- oder Carbonsäuresalzes, bezogen auf das Gewicht des aromatischen Copolycarbonatgemisches, vorhanden sind.

**Claims**

1. Halogen-containing mixtures of aromatic copolycarbonates, characterised in that they contain

a) a copolycarbonate of

A) a diphenol of the formula

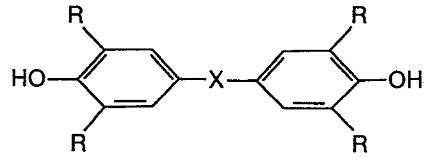

wherein

the radicals R are identical or different and represent H or $C_1$–$C_4$-alkyl and

wherein

X represents a bond, $C_1$–$C_8$-alkylene, $C_2$–$C_8$-alkylidene, $C_5$–$C_{15}$-cycloalkylene, $C_5$–$C_{15}$-Cycloalkylidene, $-SO_2-$, –SO–, –CO– or

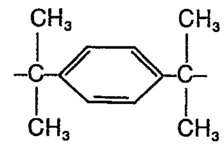

B) 2 to 50 mol%, based on the total mols of diphenols, of an aromatic thiodiphenol of the formula

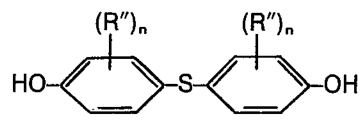

wherein

the radicals R″, which can be identical or different, represent H or $C_1$–$C_4$-alkyl and

n represents 0, 1 or 2,

in the form of the reaction product of A), B) and

C) a compound from the group consisting of carbonyl bromide, phosgene, bischloroformic esters of (A) or (B) and diaryl carbonates,

b) intimately mixed with a monomeric halogen-containing compound having 2 to 10 halogen atoms, the halogen-containing mixtures of aromatic copolycarbonates containing 1 to 5% by weight of halogen, and

c) 0,01 to 3% by weight of a sulphonic acid salt or carboxylic acid salt, based on the weight of the aromatic copolycarbonate mixture.

2. Halogen-containing aromatic copolycarbonate mixtures according to Claim 1, characterised in that 0,05 to 1% by weight of a sulphonic acid salt or carboxylic acid salt, based on the weight of the aromatic copolycarbonate mixture, is present.

**Revendications**

1. Mélanges halogénés de copolycarbonates aromatiques, caractérisés en ce qu'ils contiennent

a) un copolycarbonate de

A) un diphénol de formule

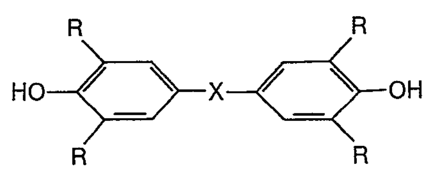

dans laquelle les restes R sont identiques ou différents et représentent H ou des alkyle en $C_1$–$C_4$ et X représente une liaison ou un reste alkylène en $C_1$–$C_8$, alkylidène en $C_2$–$C_8$, cycloalkylène en $C_5$–$C_{15}$, cycloalkylidène en $C_5$–$C_{15}$, $-SO_2$, –SO–, –CO–, ou

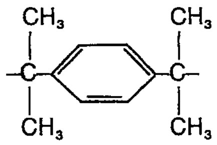

B) 2 à 50 moles%, par rapport au total des moles des diphénols, d'un thiodiphénol aromatique de formule

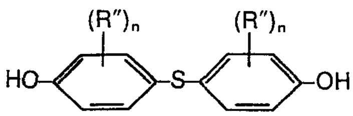

dans laquelle les restes R″, qui peuvent être identiques ou différents, représentent H ou un reste alkyle en $C_1$–$C_4$ et n est égal à 0, 1 ou 2, sous forme du produit de réaction de A), B) et

C) un composé choisi dans le groupe constitué par le bromure de carbonyle, le phosgène, les esters bischloroformiques de A) ou B) et les carbonates de diaryle,

b) en mélange intime avec un composé halogéné monomère ayant 2 à 10 atomes d'halogène, les mélanges halogénés de copolycarbonates aromatiques contenant environ 1 à 5% en poids d'halogène, et

c) environ 0,01 à 3% en poids, de préférence 0,05 à 1% en poids, d'un sel d'acide sulfonique ou d'acide carboxylique, par rapport au poids du mélange de copolycarbonates aromatiques.

2. Mélanges halogénés de copolycarbonates aromatiques selon la revendication 1, caractérisé en ce qu'ils contiennent 0,05 à 1% en poids d'un sel d'acide sulfonique ou carboxylique, par rapport au poids du mélange aromatique de copolycarbonates.